(19) Europäisches Patentamt
European Patent Office
Office européen des brevets

(11) EP 4 198 096 A1

(12) # EUROPEAN PATENT APPLICATION

(43) Date of publication:
**21.06.2023 Bulletin 2023/25**

(21) Application number: **22212567.6**

(22) Date of filing: **09.12.2022**

(51) International Patent Classification (IPC):
***C09D 7/20*** *(2018.01)* ***C09D 9/00*** *(2006.01)*
***C11D 7/50*** *(2006.01)* ***C11D 7/26*** *(2006.01)*

(52) Cooperative Patent Classification (CPC):
**C09D 7/20; C09D 9/005; C11D 7/26**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2021 IT 202100031733**

(71) Applicant: **Liberty Chemicals S.r.l.**
**21010 Arsago Seprio - Varese (IT)**

(72) Inventors:
- **ZAGO, Mirko**
  **I-21010 Arsago Seprio, VARESE (IT)**
- **MANENTI, Alberto**
  **I-21010 Arsago Seprio, VARESE (IT)**
- **GIANI, Renato**
  **I-21010 Arsago Seprio, VARESE (IT)**

(74) Representative: **Long, Giorgio et al**
**Jacobacci & Partners S.p.A.**
**Via Senato, 8**
**20121 Milano (IT)**

(54) **SOLVENT COMPOSITION**

(57) The present invention relates to a solvent composition, in particular a solvent composition lacking butyl glycol and comprising components of non-petrochemical natural origin.

In particular, the present invention is directed to a solvent composition comprising or consisting of a mixture of a C1-C5 alkyl lactate, a linear or branched C2-C6 alcohol, a methyl ester of a C6-C20 fatty acid or a methyl ester of a natural oil and a (C1-C4)-monoalkyl or (C1-C4)-dialkyl ether of a polyol, the composition lacking butyl glycol.

EP 4 198 096 A1

## Description

Technical field of the invention

The present invention relates to a solvent composition, in particular a solvent composition lacking butyl glycol and comprising components of non-petrochemical natural origin.

Background art

Solvents are chemicals widely used in many fields, including the field of paint and varnish, industrial and household cleaning compositions, printing inks, and the mining industry. In particular, in the field of paint and varnish, solvents are used both as diluents and to remove stains and traces of dye from solid surfaces, from work tools, such as brushes or rollers or the like, or even from parts of the user's body.

In addition to a high solvent power, the solvent compositions should thus also have a low toxicity, in particular those used for domestic use. Most of the solvents currently available on the market do not have such a low toxicity, which creates problems both for the health of the user and for subsequent dispersion into the environment. In fact, it would be necessary for the solvents normally used in the aforesaid fields to be biodegradable.

In particular, a component normally present in commercial solvents is butyl glycol. Such a compound, which until now had been considered non-toxic, has recently been reclassified. In fact, the ECHA (European Chemical Agency) in Helsinki, based on various toxicological studies, has already launched a much heavier classification, which will come into force from 2022 and which includes:

- Acute toxicity, oral (category 4), risk phrase H 302, Harmful if swallowed
- Acute toxicity, inhalation (category 4), risk phrase H 332, Harmful if inhaled
- Acute toxicity, skin (category 3), risk phrase H 311, Toxic in contact with skin
- Skin irritation (category 2), risk phrase H 315, Causes skin irritation
- Eye irritation (category 2), risk phrase H 319, Causes serious eye irritation.

Therefore, there is a need to provide a solvent for the uses indicated above which lacks butyl glycol, but which retains the solvent features thereof.

Summary of the invention

The present invention addresses the problem of providing a solvent composition having a solvent power comparable to or even higher than that of solvents containing butyl glycol, but having a much lower toxicity, which is preferably largely from renewable sources and which is even more preferably as biodegradable as possible.

Such a problem is solved by a solvent composition comprising non-petrochemical components of natural origin, as outlined in the appended claims.

The present invention relates to a solvent composition comprising or consisting of a mixture of a C1-C5 alkyl lactate, a linear or branched C2-C6 alcohol, a methyl ester of a C6-C20 fatty acid or a methyl ester of a natural oil, preferably of plant origin, and a (C1-C4)-monoalkyl or (C1-C4)-dialkyl ether of a polyol, the composition being butylglycol-free.

The text of the appended claims forms an integral part of the present description for the purpose of sufficiency of description.

Further features and advantages of the invention will become apparent from the following description of preferred embodiments, given by way of non-limiting examples.

Detailed description of the invention

The present invention relates to a solvent composition comprising or consisting of a mixture of a C1-C5 alkyl lactate, a linear or branched C2-C6 alcohol, a methyl ester of a C6-C20 fatty acid or a methyl ester of a natural oil, preferably of plant origin, and a C1-mono or dialkyl ether, or a (C2-C4)-monoalkyl or (C2-C4)-dialkyl ether, of a polyol, or a cyclic diether consisting of two contiguous oxygen atoms of a polyol and a linear or branched (C2-C4)alkyl residue, the composition being butylglycol-free.

In preferred embodiments, the solvent composition of the invention comprises or consists of:

a) between 15% and 30% by weight, more preferably between 20% and 25% by weight, of C1-C5 alkyl lactate;
b) between 1% and 8% by weight, more preferably between 2.5% and 5% by weight of linear or branched C2-C6 alcohol;
c) between 20% and 35% by weight, more preferably between 25% and 30% of methyl ester of a C6-C20 fatty acid or methyl ester of a natural oil;
d) between 35% and 60% by weight, more preferably between 40% and 50% by weight of Cl-mono or dialkyl ether, or a (C2-C4)-monoalkyl or (C2-C4)-dialkyl ether, of a polyol, or a cyclic diether consisting of two contiguous oxygen atoms of a polyol and a linear or branched (C2-C4)alkyl residue, the composition being butylglycol-free.

Component a) is preferably ethyl lactate.
Component b) is preferably isobutyl alcohol.
Component c) is preferably methyl n-octanoate or methyl cocoate.
In component d), the monoalkyl or dialkyl substituents can thus be C1, C2, C3 or C4 alkyls, in which the C3 alkyl and C4 alkyl substituents can be linear or branched.
Component d) is preferably isopropylidene glycerol.
The methyl ester of a natural oil, preferably of plant origin, can be selected from methyl esters of coconut oil, soy, rapeseed or the like.
The isopropylidene glycerol (D, L-1,2-isopropylideneglycerol, CAS 100-79-8) has the following structural formula:

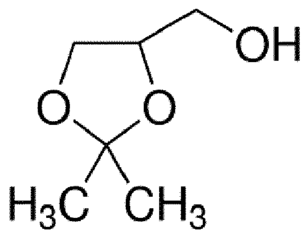

It is mixable in both water and alcohol.
The solvent composition of the invention or the individual components can be obtained by known processes of alcoholic, lactic or malolactic fermentation of plant substrates containing a carbohydrate content greater than 60% by weight in the dried material. Preferred plant substrates are selected from: grains, buckwheat, beet and cane sugar, tubers, fruits and mixtures thereof. For example, the procedures described in WO 2018/192952 of Galactic SA or in WO 2005/108533 of Cargill Inc. can be used.
The grains are preferably selected from wheat, corn, rice, barley, broomcorn, millet, oats, rye, fonio, teff, spelt, sorghum, spelt and mixtures thereof.
The tubers are preferably selected from potatoes, sweet potatoes, Jerusalem artichokes and mixtures thereof.
Alternatively, the composition of the invention can be made by mixing in suitable quantities the four components indicated above of non-petrochemical origin or obtained by synthetic routes.
The solvent composition according to the invention is preferably characterized by a low toxicity, a high carbon content from renewable sources and a total or almost total biodegradability.
In preferred embodiments, the solvent composition of the invention has a carbon content from renewable sources (i.e., of plant origin) between 65% and 80% by weight. The carbon content from renewable sources was determined according to the method included in European standard UNI EN 16640:2017, according to the AMS (Accelerator Mass Spectrometry) method.
The AMS method allows the direct determination of the $^{14}C$ content in the sample based on a reference standard, from which the $^{14}C/^{12}C$ ratio of the analyzed sample can be calculated and from this, based on known samples and by means of a calibration curve, the percentage of carbon from renewable sources is derived, with an error between 2% and 5%.
In preferred embodiments, the solvent composition of the invention has a boiling point in the range of 154-270°C at ambient pressure, a specific gravity at 25°C of about 0.987 g/ml at 20°C and a viscosity at 20°C of 5.8 mPa (measured with Brookfield viscometer).
The solvent composition of the invention can be used in the following applications: solvent for dyes, coatings, ink cleaner, component of paint, varnish and enamel formulations or of acrylic resin formulations, paint remover, component of asphalt release agents, flame retardant foams, leather protectors, liquid soaps, cosmetics, dry cleaning solutions, herbicides, silicone caulking, oil dispersants, fracturing fluid formulations for oil drilling, drilling stabilizers.

The solvent power of the composition of the invention has been tested as follows.

Materials and methods

Blend design: the selection of potential raw materials was first carried out simply based on the similarity of molecular structure and then comparing the solubility parameters of Hansen and Hildebrand (HSP) with those of butyl glycol (BG). The HSPs and GHS classification of BG are shown in table 1. HSPs of selected molecules (BG included) were found in Solvent Cleaning: Science and Technology, John B Durkee, 2014, appendix Al (14). The HSPs of 2,2-dimethyl-1,3-dioxolan-4-yl methanol were obtained directly from the manufacturer. The GHS classification data were found on the ECHA registration dossier for each individual substance. The substances selected are shown in table 2.

Table 1: basic data on 2-butoxyethanol (BG)

| solvent | CAS or EC no. | Hansen (MPa1/2) | | | Hildebrand (MPa1/2) | GHS Classification | RAC proposed classification |
|---|---|---|---|---|---|---|---|
| | | δd | δp | δh | δt | | |
| BG | 111-76-2 | 16.00 | 5.10 | 12.30 | 20.82 | GHS07 | GHS06, GHS07 |

Table 2: basic data on selected solvents

| solvent | CAS or EC no. | Hansen (MPa1/2) | | | Hildebrand (MPa1/2) | GHS Classification |
|---|---|---|---|---|---|---|
| | | δd | δp | δh | δt | |
| Ethyl lactate | 687-47-8 or | 16.7 | 6.45 | 11.6 | 21.33 | GHS07, GHS05, GHS02 |
| | 97-64-3 | | | | | |
| Butyl lactate | 34451-19-9 | 15.80 | 6.50 | 10.20 | 19.90 | GHS07, GHS05 |
| Propyl lactate | 53651-69-7 | 15.80 | 7.10 | 11.30 | 20.68 | GHS05 |
| 2-methylpropan-1-ol | 78-83-1 | 15.10 | 5.70 | 15.90 | 22.66 | GHS07, GHS05, GHS02 |
| Butan-1-ol | 71-36-3 | 16.00 | 5.70 | 15.80 | 23.20 | GHS02, GHS05, GHS07 |
| Pentan-1-ol | 71-41-0 | 15.90 | 5.90 | 13.90 | 21.93 | GHS02, GHS05, GHS07 |
| Isoamyl alcohol | 123-51-3 | 15.80 | 5.20 | 13.30 | 21.30 | GHS02, GHS05, GHS07 |
| Fatty acid meth esters | 85586-21-6 or 68990-52-3 or 61788-59-8 | 16.40 | 3.30 | 4.70 | 17.38 | - |
| (2-methoxy methylethoxy) propanol | 34590-94-8 | 15.50 | 5.70 | 11.20 | 19.95 | - |
| 2-methoxy-1-(2-methoxypropoxy) propane | 111109-77-4 | 15.60 | 7.00 | 6.50 | 18.26 | - |
| Isopropylidene glycerol | 100-79-8 | 16.00 | 7.20 | 19.30 | 23.50 | GHS07 |

It is well known in the art that HSPs can be used, with some precautions, to predict whether a given material

will be capable of dissolving another one and forming a homogeneous solution therewith.

HSPs are often used in the coating industry to predict whether a given solvent will be capable of dissolving a given resin or to find a compatible additive to be used in plastic formulations. The solubility parameters are nothing more than quantitative manifestations of the three main types of intermolecular forces (dispersion, polar and hydrogen-binding forces) which can be found in a given substance. Very simplistically, if one substance has HSPs very similar to another one, then it is very likely that the two substances will form a homogeneous solution once mixed. This same principle was used to design the biological-based substitute of 2-butoxyethanol according to the invention, which confirmed our prediction with experimental dissolution tests.

Calculation of solubility parameters: the HSP calculation of the BG substitution was performed using the equation:

$$\delta any = \sqrt{\sum \{vi \times \delta i^2\}}$$

where "any" is one of the three solubility parameters of the mixture, v is the volume concentration of the i-component of the mixture and δi is the solubility parameter of the i-component of the mixture. The distance between the designed mixtures and BG in Hansen's space (Ra) was calculated with the following equation:

$$Ra = \sqrt{(4 \times \{\delta d1 - \delta d2\}^2 + 4 \times \{\delta p1 - \delta p2\}^2 + 4 \times \{\delta h1 - \delta h2\}^2)}$$

The interaction radius R0 was set at 8.59 MPa^1/2 as recommended in the literature.

The energy difference was calculated with the following equation:

$$RED = Ra / R_0$$

This procedure is known as the Hansen approach but was also controlled with a simplified Hildebrand approach described below. It is known in the art that if the difference between the Hildebrand solubility parameters (Δδt) of two substances or mixtures is less than 5 $MPa^{1/2}$, then it is likely that the substances or mixtures will give a homogeneous solution once mixed.

All the calculations were performed using an Excel spreadsheet.

**Dissolution tests:** two different solutions were assembled for each polymer/resin tested: one with 2-butoxyethanol and the other with a composition according to the invention, identified as BC 2, for comparison (as reported in table 3). The dissolution protocol included heating (45°C) and stirring (300 rpm) for 30 minutes. After that time, the results were visually analyzed. The solution was assembled using normal laboratory equipment such as a compressed air mixer, a glass beaker, a heating plate, and a thermometer. We chose to test four types of resins: two resins known to be soluble in BG (acrylic copolymer and rosin) under certain conditions and two non-BG-soluble resins (polyvinyl alcohol and a vinyl acetate/crotonic acid copolymer) under the same conditions. The result of a dissolution test was marked as positive if a clear and stable solution was obtained after mixing and as negative if a cloudy mixture was obtained or an incomplete dissolution of the polymer/resin was achieved in the tested condition.

Biological-based content calculation: the biological-based content calculations were performed according to the procedure described in EN 16785-2.

Table 3: Assembled solutions

| solution | solvent | Polymer/resin | Solvent %w/w | Polymer/ resin %w/w |
|---|---|---|---|---|
| 1 | BG | Acrylic polymer | 90% | 10% |
| 2 | BC2 | Acrylic polymer | 90% | 10% |
| 3 | BG | Vinyl acetate/crotonic acid copolymer | 90% | 10% |
| 4 | BC2 | Vinyl acetate/crotonic acid copolymer | 90% | 10% |
| 5 | BG | Polyvinyl alcohol | 90% | 10% |

(continued)

| solution | solvent | Polymer/resin | Solvent %w/w | Polymer/ resin %w/w |
|---|---|---|---|---|
| 6 | BC2 | Polyvinyl alcohol | 90% | 10% |
| 7 | BG | rosin | 90% | 10% |
| 8 | BC2 | rosin | 90% | 10% |

Results and discussion

Table 4 shows an example of the composition according to the invention (BC 2), which generally consists of 23.2% w/w of a small lactate ester, 3.9% w/w of a primary or secondary alcohol, 26.7% w/w of a methyl fatty acid ester (or mixtures such as UVC-B substances) and 46.2% w/w of a cyclic or linear glycolic ether. Table 5 shows the results of the HSP calculations of this mixture. As can be seen, the HSPs of the mixture according to the invention are very similar to those of BG. This is also confirmed by the calculation of RED (BC2 vs BG) which is close to 0 (0.26) and by the calculation of $\Delta\delta t$ (BC2 vs BG) which is also close to 0 (0.30) and much less than 5.

Table 4: composition of the invention (BC2)

| substance | CAS or EC no. | %w/w | Bio-based content according to EN 16785-2 | |
|---|---|---|---|---|
| | | | Single components | Total mixture |
| Ethyl lactate | 687-47-8 | 23.2 | 100 %w/w | 77.08% w/w |
| Isobutyl alcohol | 78-83-1 | 3.9 | 0.00 %w/w | |
| Methyl cocoate | 61788-59-8 | 26.7 | 86.40 %w/w | |
| Isopropylidene glycerol | 100-79-8 | 46.2 | 66.70 %w/w | |

Table 5: comparison of HSPs between BC2 and BG

| solvent | Hansen (Mpa$^{1/2}$) | | | Hildebrand (MPa$^{1/2}$) | RED (BC 2 vs BG) | $\Delta\delta t$ (BC 2 vs BG) (MPa$^{1/2}$) |
|---|---|---|---|---|---|---|
| | $\delta d$ | $\delta p$ | $\delta h$ | $\delta t$ | | |
| BG | 16.00 | 5.10 | 12.30 | 20.82 | 0.26 | 0.30 |
| BC2 | 15.88 | 5.99 | 14.31 | 21.12 | | |

The results of the calculations were validated by experimental dissolution tests. The composition BC2 was capable of dissolving the same BG polymers/resins under the conditions tested as shown in table 6. Furthermore, it is worth noting that the BC2 composition of the invention was not capable of dissolving the polymers/resins which BG is not capable of dissolving. In conclusion, calculations and experimental tests have shown that the solvent power of the mixture according to the invention (BC2) is very close, if not exactly the same, to that of BG.

Table 6: dissolution test

| solution | solvent | Polymer/ resin | Solvent %w/w | Polymer/ resin %w/w | result |
|---|---|---|---|---|---|
| 1 | BG | Acrylic copolymer | 90 | 10 | + |
| 2 | BC2 | Acrylic copolymer | 90 | 10 | + |
| 3 | BG | Vinyl acetate/crot onic acid copolymer | 90 | 10 | - |
| 4 | BC2 | Vinyl acetate/crot onic acid copolymer | 90 | 10 | - |
| 5 | BG | Polyvinyl alcohol | 90 | 10 | - |
| 6 | BC2 | Polyvinyl alcohol | 90 | 10 | - |
| 7 | BG | rosin | 90 | 10 | + |
| 8 | BC2 | rosin | 90 | 10 | + |

A further experiment was conducted to evaluate the importance of the alkyl lactate and dialkyl ether components of a polyol for the solvent power of the composition of the invention. The experiments are described below.

**Materials and methods**

Dissolution test

Three solutions were assembled for each polymer/resin tested, namely:

- BC2 formulation as above
- BC2 lacking lactate ester (solv001)
- BC2 lacking monoalkyl or dialkyl ether of a polyol (solv002).

See tables 7 and 8 for the definition of such an experiment.
The dissolution protocol included heating (45°C) and stirring (≈ 300 rpm) for 30 minutes. After that time, the results were visually analyzed. The solution was assembled using normal laboratory equipment such as a compressed air mixer, a glass beaker, a heating plate and a thermometer.
Two types of resins were chosen to be tested: an acrylic copolymer and rosin as above, which had been easily dissolved in both BC2 and butyl glycol.

Table 7: Assembled solutions

| Sol. name | Solvent | Polymer/resin | %w/w solvent | %w/w polymer/resin |
|---|---|---|---|---|
| 9 | BC2 | Acrylic copolymer | 90 | 10 |
| 10 | Solv001 | Acrylic copolymer | 90 | 10 |
| 11 | Solv002 | Acrylic copolymer | 90 | 10 |
| 12 | BC2 | rosin | 90 | 10 |
| 13 | Solv001 | rosin | 90 | 10 |
| 14 | Solv002 | rosin | 90 | 10 |

Table 8: solv001 and solv002 composition

| Substance | CAS or EC number | Solv001 %w/w | Solv002 %w/w |
|---|---|---|---|
| Ethyl lactate | 687-47-8 | 0.0 | 69.2 |
| 2-methylpropan-1-ol | 78-83-1 | 3.9 | 3.9 |
| Me esters of fatty acids | 61788-59-8 | 26.7 | 26.7 |
| Isopropylidene glycerol | 100-79-8 | 69.2 | 0.00 |

**Results and discussion**

Table 8 shows the compositions of the comparison solvent mixtures, called solv001 and solv002, respectively. Table 9 shows the results of the dissolution tests. The results were marked as "positive" if a clear and transparent solution is achieved in the tested condition, while they were marked as "negative" if not.

Table 9: dissolution test results

| Sol. name | Solvent | Polymer/resin | result |
|---|---|---|---|
| 9 | BC2 | Acrylic copolymer | positive |
| 10 | Solv001 | Acrylic copolymer | negative |
| 11 | Solv002 | Acrylic copolymer | negative |
| 12 | BC2 | rosin | positive |

(continued)

| Sol. name | Solvent | Polymer/resin | result |
|---|---|---|---|
| 13 | Solv001 | rosin | negative |
| 14 | Solv002 | rosin | negative |

As can be seen, it was confirmed that the BC2 formulation is capable of easily dissolving both the acrylic copolymer and rosin, while solv001 (lacking alkyl lactate) and solv002 (lacking monoalkyl or dialkyl ether of a polyol) did not show the same solvent power, as the polymer/resin remained undissolved at the bottom of the vials and clearly visible after 30 minutes under the conditions tested.

PREPARATION EXAMPLE OF THE SOLVENT COMPOSITION OF THE INVENTION

In a suitable mixer for the use and preparation of flammable solvents, thus according to Atex standard, the four ingredients are added in order, namely ethyl lactate, isobutanol, methyl octanoate and isopropylidene glycerol in a weight ratio of 23/4/27/46.

It was then mixed at room temperature for 20-30 minutes.

A representative sample is then taken for quality control analyses. If the data collected are complying, the finished product is discharged into the appropriate packaging.

It is apparent that only some particular embodiments of the present invention have been described, to which those skilled in the art will be able to make all changes required to adapt it to particular applications, without departing from the scope of protection of the present invention.

**Claims**

1. A solvent composition comprising a mixture of a C1-C5 alkyl lactate, a linear or branched C2-C6 alcohol, a methyl ester of a C6-C20 fatty acid or a methyl ester of a natural oil, preferably of plant origin, and a C1-mono or dialkyl ether, or a (C2-C4)-monoalkyl or (C2-C4)-dialkyl ether, of a polyol, or a cyclic diether consisting of two contiguous oxygen atoms of a polyol and a linear or branched (C2-C4)alkyl residue, the composition being butylglycol-free.

2. The solvent composition according to claim 1, wherein the monoalkyl or dialkyl substituents can be C1, C2, C3 or C4 alkyls, wherein the C3 alkyl and C4 alkyl substituents can be linear or branched.

3. The solvent composition according to claim 1 or 2, comprising or consisting of:

   a) between 15% and 30% by weight of C1-C5 alkyl lactate;
   b) between 1% and 8% by weight of linear or branched C2-C6 alcohol;
   c) between 20% and 35% by weight of methyl ester of a C6-C20 fatty acid or methyl ester of a natural oil;
   d) between 35% and 60% by weight of Cl-mono or dialkyl ether, or a (C2-C4)-monoalkyl or (C2-C4)-dialkyl ether, of a polyol, or a cyclic diether consisting of two contiguous oxygen atoms of a polyol and a linear or branched (C2-C4)alkyl residue, the composition being butylglycol-free.

4. The solvent composition according to claim 3, comprising or consisting of:

   - between 20% and 25% by weight of ethyl lactate;
   - between 2.5% and 5% by weight of isobutyl alcohol;
   - between 25% and 30% by weight of methyl octanoate or methyl cocoate;
   - between 40% and 50% by weight of isopropylidene glycerol.

5. The solvent composition according to any one of claims 1 to 4, having a carbon content from renewable sources of plant origin between 65% and 80% by weight, as determined according to the AMS method included in European standard UNI EN 16640:2017.

6. The solvent composition according to any one of claims 1 to 5, wherein the solvent composition has a boiling point in the range of 154-270 °C at ambient pressure, a specific gravity at 25°C of about 0.987 g/ml at 20°C and a viscosity

at 20°C of 5.8 mPa (measured by a Brookfield viscometer).

Europäisches Patentamt
European Patent Office
Office européen des brevets

# EUROPEAN SEARCH REPORT

Application Number
EP 22 21 2567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/016805 A2 (VERTEC BIOSOLVENTS INC [US]) 7 February 2008 (2008-02-07) * the whole document * * claims 11, 12, 15, 19 * ----- | 1-6 | INV. C09D7/20 C09D9/00 C11D7/50 C11D7/26 |
| Y | US 2017/137639 A1 (LEENAN ANTHONY [AU] ET AL) 18 May 2017 (2017-05-18) * the whole document * * Compositions 3, 4; claims 16, 20, 21, 23, 24, 33 * ----- | 1-6 | |
| Y | US 6 191 087 B1 (OPRE JAMES E [US] ET AL) 20 February 2001 (2001-02-20) * the whole document * * claims 1, 4, 5-7, 10 * * column 5, line 10 - line 18 * ----- | 1-3,5,6 | |
| Y | US 2015/252302 A1 (RIETH LEE R [US] ET AL) 10 September 2015 (2015-09-10) * the whole document * * paragraphs [0001], [0002], [0072] - [0077], [0101], [0110] * ----- | 1-3,5,6 | TECHNICAL FIELDS SEARCHED (IPC) |
| Y | WO 2020/142273 A1 (FOURTH PRINCIPLE LLC [US]) 9 July 2020 (2020-07-09) * the whole document * * paragraphs [0001], [0002], [0038], [0078]; example 5 * ----- | 1-6 | C09D C11D |
| A | US 8 882 853 B2 (SON SEONG-KIL [KR]; OH KYOUNG-HEE [KR] ET AL.) 11 November 2014 (2014-11-11) * the whole document * * column 2, line 51 - line 65; claims * ----- | 1-6 | |

The present search report has been drawn up for all claims

1

| Place of search | Date of completion of the search | Examiner |
|---|---|---|
| Munich | 31 March 2023 | Rangheard, Claudine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 21 2567

This annex lists the patent family members relating to the patent documents cited in the above-mentioned European search report. The members are as contained in the European Patent Office EDP file on
The European Patent Office is in no way liable for these particulars which are merely given for the purpose of information.

31-03-2023

| Patent document cited in search report | Publication date | Patent family member(s) | Publication date |
|---|---|---|---|
| WO 2008016805 A2 | 07-02-2008 | CA 2659787 A1 | 07-02-2008 |
| | | EP 2057261 A2 | 13-05-2009 |
| | | US 2008029740 A1 | 07-02-2008 |
| | | WO 2008016805 A2 | 07-02-2008 |
| US 2017137639 A1 | 18-05-2017 | AU 2015278250 A1 | 03-03-2016 |
| | | CN 105980489 A | 28-09-2016 |
| | | US 2017137639 A1 | 18-05-2017 |
| | | WO 2015192184 A1 | 23-12-2015 |
| US 6191087 B1 | 20-02-2001 | AU 7109400 A | 10-04-2001 |
| | | CA 2382600 A1 | 15-03-2001 |
| | | EP 1218474 A1 | 03-07-2002 |
| | | JP 2003519248 A | 17-06-2003 |
| | | MX PA02002182 A | 20-08-2003 |
| | | US 6191087 B1 | 20-02-2001 |
| | | WO 0118162 A1 | 15-03-2001 |
| US 2015252302 A1 | 10-09-2015 | US 2015252302 A1 | 10-09-2015 |
| | | WO 2014047428 A1 | 27-03-2014 |
| WO 2020142273 A1 | 09-07-2020 | NONE | |
| US 8882853 B2 | 11-11-2014 | CN 103502415 A | 08-01-2014 |
| | | EP 2684945 A1 | 15-01-2014 |
| | | JP 5885762 B2 | 15-03-2016 |
| | | JP 2014514373 A | 19-06-2014 |
| | | KR 101128856 B1 | 23-03-2012 |
| | | US 2013345107 A1 | 26-12-2013 |
| | | WO 2012121475 A1 | 13-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018192952 A
- WO 2005108533 A

### Non-patent literature cited in the description

- *CHEMICAL ABSTRACTS,* 100-79-8
- **JOHN B DURKEE.** *Solvent Cleaning: Science and Technology,* 2014